# EUROPEAN PATENT SPECIFICATION

(11) **EP 0 686 681 B1**
(45) Date of publication and mention of the grant of the patent: **05.08.1998**
(21) Application number: 95401259.7
(22) Date of filing: 31.05.1995
(51) Int. Cl.: C08F 265/04, C09J 4/00, C09J 4/06

(54) **Alpha-cyanoacrylate adhesive composition**
Klebemittelzusammensetzung auf Alphacyanoacrylat Basis
Composition adhésive à base d'alphacyanoacrylate

(30) Priority: 08.06.1994 JP 151656/94
(43) Date of publication of application: 13.12.1995
(73) Proprietor: TAOKA CHEMICAL COMPANY, LIMITED, Yodogawa-ku, Osaka 532 (JP)
(72) Inventor: Nishino, Yukinori, Osaka-shi, Osaka 533 (JP); Hata, Chiaki, Ibaraki-shi, Osaka 567 (JP)
(74) Representative: Eidelsberg, Victor Albert

(56) References cited:
- EP-A- 0 151 527
- EP-A- 0 209 067
- EP-A- 0 323 720
- EP-A- 0 390 402
- FR-A- 2 506 777
- FR-A- 2 691 714
- US-A- 4 845 151

## Description

The present invention relates to an α-cyanoacrylate adhesive composition having high thixotropy, excellent stability with age including difficulty in separation etc., and excellent adhesiveness.

α-Cyanoacrylates have been widely used as instantaneous adhesives for adhesion of rubbers, plastics, metals, glasses and woods, since α-cyanoacrylates easily polymerize anionically, or polymerize and cure in a short period of time without any catalysts or heating, only in the presence of anionic activators such as moisture or alkaline substances present on surfaces of solid substrates or in air. One of problems encountered when α-cyanoacrylate adhesives that flow easily are applied is that uniform coating on inclined planes is hardly obtained. Another problem is poor adhesion encountered when an application is made on porous substrates, for example, woods or leathers, because the adhesives penetrate into the surface of the substrates. One of approaches in order to dissolve these problems is that polymer thickeners are blended with α-cyanoacrylate adhesives in order to increase viscosity. Although there was some improvement in penetration in the surface of porous substrates, there were problems left undissolved yet. That is, an amount of additive thickeners is limited because of solubility. Jelly-like products are hardly obtained after a little excessive amount of the thickeners is added. Too large amount of the thickners causes spinnability and α-cyanoacrylates obtained are not satisfactory in various properties. An other approach is that ultrafine anhydrous silica is blended with and dispersed in α-cyanoacrylate adhesives in order to give high thixotropy thereto and improve flowability and penetration.

However, conventional technologies, i.e., blending ultrafine anhydrous silicas or blending a small amount of thickeners thereto, cause separation while the composition is stored. That is, flowable liquid of low viscosity lies on a highly thixotropic layer. After this separation occurs, the easily flowable liquid is discharged when the adhesive composition is discharged from a vessel, until poor adhesion results. Usefulness as a highly thixotropic composition is severely damaged. Conventionally, blending thickeners such as polymethyl methacrylate has been known for improving dispersion stability. However, such conventional method is not satisfactory yet. JP-B-4-15267 mentions the use of methyl methacrylate copolymer as a thickener. Relationship between weight average molecular weight of the thickener and stability aimed in the present invention with age of α-cyanoacrylate adhesives is unclear. An amount of the thickener in the adhesives has been as small as less than 10 %, so that advantageous effect due to the thickeners has not been clear yet.

After the present inventors studied, they succeeded in finding that addition of a specific amount of polyalkyl methacrylate having a specific molecular weight improves thixotropy, stability and the like. According to the present invention, an α-cyanoacrylate adhesive composition is provided, which has high thixotropy, excellent stability with age including difficulty in separation, and excellent adhesiveness.

The present invention relates to an α-cyanoacrylate adhesive composition, the alpha cyanoacrylate having the formula 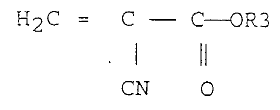 wherein R3 is a hydrocarbon residue having 1 through 16 carbon atoms and may be substituted, which comprises (b) 10 through 20 parts by weight of (I) polyalkyl methacrylates being a homopolymer of lower alkyl esters of methacrylic acid or (II) copolymers of (i) alkyl methacrylates and (ii) other methacrylates or acrylates excluding the (i) alkyl methacrylates, the monomer moiety (i) being the same as that used in the above polyalkylmethacrylates (I), said copolymers having the same weight average molecular weight as that of the polyalkyl methacrylates (I), (c) 2 through 20 parts by weight of ultrafine anhydrous silicas, and (d) 0 through 20 parts by weight of quick curing additives, (b)-(d) being on the basis of (a) 100 parts by weight of α-cyanoacrylate compounds characterized by component (b) having a weight average molecular weight of 100,000 through 300,000.

US-A-4 845 151 recites adhesive compositions comprising components (a) through (d). However, it does not disclose the molecular weight of the thickener as provided in the present invention.

The present invention is featured in that separation hardly appears in adhesive compositions containing ultrafine anhydrous silicas by the use of the specific amount of the polymers (b) having a relatively small molecular weight, although said polymers are polyalkyl methacrylates or the like, and are familiar as a thickeners for α-cyanoacrylates.

The present polymer component (b), i.e., polyalkyl methacrylates or copolymers of alkyl methacrylates and other methacrylates or acrylates are those having a weight average molecular weight of 100,000 through 300,000, preferably 120,000 through 200,000.

An amount of addition of the polymer component (b), i.e., polyalkyl methacrylates or copolymers of alkyl methacrylates and other methacrylates or acrylates is 10 through 20 parts by weight, preferably 12 through 17 parts by weight on the basis of 100 parts by weight of the α-cyanoacrylates.

It is important for the polymer component (b), i.e., polyalkyl methacrylates or copolymers of alkyl methacrylates and other methacrylates or acrylates to satisfy the both parameters of weight average molecular weight and amount of addition. Various difficulties are encountered with respect to separation in layers during storage, compatibility or dispersion stability (dispersibility) during preparation, viscosity stability (storage stability) and thread-formation, as long as the two parameters mentioned above are not fully met.

Furthermore, the present inventors have found that adhesives having a quick curing rate, excellent adhesiveness and high thixotropy can be obtained when quick curing additives, for example, polyalkylene oxide derivatives, are used together.

The most preferable embodiment of the present invention is a composition comprising (b) 10 through 20 parts by weight of polymers, i.e., (I) polyalkyl methacrylates or (II) copolymers of alkyl methacrylates and other methacrylates or acrylates, said polymers (I) or (II) having a weight average molecular weight of 100,000 through 300,000, (c) 2 through 20 parts by weight of ultrafine anhydrous silicas and (d) 0.001 through 20 parts by weight of quick curing additives, (b)-(d) being on the basis of (a) 100 parts by weight of α-cyanoacrylates.

The (a) α-cyanoacrylates have the formula (2): 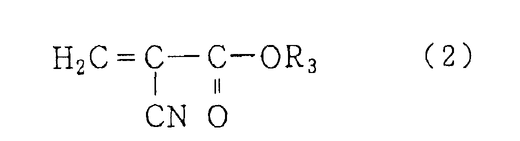 wherein R₃ is a hydrocarbon residue having 1 through 16 carbon atoms, and may be substituted. Examples of R₃ are methyl, ethyl, n-propyl, i-propyl, n-butyl, i-butyl, sec-butyl, octyl, neopentyl, ethylhexyl, dodecyl, allyl, methoxyethyl, ethoxyethyl, methoxypropyl, benzyl, phenyl or chloroethyl residue. One or more in blended of the α-cyanoacrylates may be used.

In (b) polymer component, polyalkyl methacrylates (I) are homopolymers of lower alkyl esters of methacrylic acid. Mention is made of, for example, polymethyl methacrylate, polyethyl methacrylate, polypropyl methacrylate or polybutyl methacrylate. In the copolymers (II) of (i) alkyl methacrylates and (ii) acrylates or other methacrylates excluding the (i) alkyl methacrylates, the monomer moiety (i) is the same as that used in the above polyalkylmethacrylates (I). Monomers of the moiety (ii) are, for example, methyl methacrylate, ethyl methacrylate, n-propyl methacrylate, iso-propyl methacrylate, n-butyl methacrylate, iso-butyl methacrylate, n-hexyl methacrylate, n-heptyl methacrylate, n-octyl methacrylate, 2-ethylhexyl methacrylate, nonyl methacrylate, methoxyethyl methacrylate, methoxypropyl methacrylate, ethoxyethyl methacrylate, ethoxypropyl methacrylate, allyl methacrylate, tetrahydrofurfuryl methacrylate, methyl acrylate, ethyl acrylate, n-propyl acrylate, iso-propyl acrylate, n-butyl acrylate, iso-butyl acrylate, n-hexyl acrylate, n-heptyl acrylate, n-octyl acrylate, 2-ethylhexyl acrylate, nonyl acrylate, methoxyethyl acrylate, methoxypropyl acrylate, ethoxyethyl acrylate, ethoxypropyl acrylate, allyl acrylate or tetrahydrofurfuryl acrylate. The copolymers (II) may be in the binary, ternary or quaternary form. The copolymers (II) may be a mixture form. An amount of the other ester moiety (ii) in the copolymers is usually not more than 50% by mol, preferably not more than 25% by mol.

Examples of the (c) ultrafine anhydrous silicas are, for example, hydrophilic silicas or hydrophobic silicas. Examples of the hydrophilic silicas are Aerosil 50, 130, 200, 300, 380, etc. manufactured by Nippon Aerosil, having specific surface areas of 50 ± 15 m²/g, 130 ± 25 m²/g, 200 ± 25 m²/g, 300 ± 30 m²/g and 380 ± 30 m²/g, respectively; Reolosil QS-10, QS-20, QS-30, QS-40, etc. manufactured by Tokuyama Co. having specific surface areas of 140 ± 20 m²/g, 220 ± 20 m²/g, 300 ± 30 m²/g and 380 ± 30 m²/g, respectively; and those manufactured by DEGUSSA, Germany and CABOT, USA.

Examples of the hydrophobic silicas are Aerosil R972, RX200, RY200, etc. manufactured by Nippon Aerosil, which are obtained after surface treatments of hydrophilic silicas with a CH₃ group, trimethylsilyl group and dimethylsilicone oil, respectively, and having specific surface areas of 110 ± 20 m²/g, 140 ± 25 m²/g and 100 ± 20 m²/g, respectively; Aerosil R202, R805, R812, etc. manufactured by Nippon Aerosil, which are obtained after treatments of hydrophilic silicas with dimethylsilicone oil, octyl-silane and trimethylsilyl residue, respectively, and having specific surface areas of 100 ± 20 m²/g, 150 ± 25 m²/g and 260 ± 30 m²/g, respectively; Reolosil MT-10, DM-20, etc. manufactured by Tokuyama Co. which are obtained after treatments of hydrophilic silicas with monomethyltrichlorosilane and dimethydichlorosilane, respectively, and having specific surface areas of 120 ± 10 m²/g and 180 ± 20 m²/g, respectively; and those manufactured by DEGUSSA, Germany and CABOT, USA. These silicas may be used alone or in mixtures.

An amount of (c) ultrafine anhydrous silicas is 2 through 20 parts, preferably 4 through 15 parts by weight, on the basis of 100 parts by weight of the α-cyanoacrylates. The specific surface area of the ultrafine anhydrous silicas is related with curing rate. The smaller the specific surface area is, the faster the curing rate is, as a rule.

Examples of polyhydric alcohols used as quick curing additives, if desired, are ethylene glycol, propylene glycol, tetramethylene glycol, hexamethylene glycol, octamethylene glycol, polybutadienediol, chloropropylene glycol, 3-methylpentanediol, 2,2-diethylpropanediol, 2-ethyl-1, 4-butanediol, glycerin, trimethylolmethane, trimethylolethane, trimethylolpropane, 1,2,6-hexanetriol or 2,5-hexanediol. Their derivatives are their alkyl, alkenyl, aryl, aralkyl ethers or esters; more specifically the derivatives include, for example, methylcellosolve, ethylcellosolve, ethylene glycol-n-butyl ether, ethylene glycol phenyl ether, ethylene glycol benzyl ether, propylene glycol methyl ether, tetramethylene glycol propyl ether, ethylene glycol diethyl ether, ethylene glycol acetate, ethylene glycol monolaurate, ethylene glycol monostearate, ethylene glycol distearate, ethylcellosolve stearate, glycerin monolaurate, glycerin monostearate, sorbitan monolaurate, cellosolve acrylate, cellosolve methacrylate or cellosolve crotonate.

Polyalkylene derivatives that may be added as quick curing additives are at least one selected from the compounds having a repeating unit represented by the formula (3): 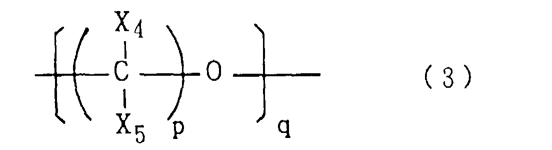 wherein X₄ and X₅ represent independently a hydrogen atom, halogen atom, hydroxy group or substituted or unsubstituted alkyl, alkenyl, aryl or aralkyl group, p is an integer of one or more, q is an integer of two or more, and the terminals may form a ring.

Polyalkylene derivatives include the following compounds, but are not limited to them.

Formaldehyde condensates; acetaldehyde condensates; trioxane polymers; polyalkylene glycols including, for example, diethylene glycol, triethylene glycol, tetraethylene glycol, polyethylene glycols (400, 1000 and others), dipropylene glycol, polypropylene glycols, polytetramethylene oxide, poly 3,3-bis(chloromethyl) butylene oxide, poly 1,3-dioxolan or ethylene oxide-propylene oxide block polymers; polyalkylene glycol monoethers including, for example, methylcarbitol, carbitol, diethylene glycol-n-butyl ether, diethylene glycol phenyl ether, diethylene glycol benzyl ether, dipropylene glycol ethyl ether, tripropylene glycol methyl ether, polyethylene glycol methyl ether, polyethylene glycol propyl ether, polyethylene glycol lauryl ether, polyethylene glycol stearyl ether, polyoxyethylene nonyl phenyl ether, or polyethylene glycol allyl ether; polyalkylene glycol diethers including, for example, diethylene glycol diethyl ether, diethylene glycol di-n-butyl ether, triethylene glycol dimethyl ether, tetraethylene glycol distearyl ether or polyethylene glycol dimethyl ethers; polyalkylene glycol monoesters including, for example, diethylene glycol monopropionate, tetraethylene glycol monoacetate, tripropylene glycol mono-n-butylate, polyethylene glycol monoacetate, polyethylene glycol monopropionate, polyethylene glycol laurate, polyethylene glycol sebacate, polyethylene glycol stearate, polyethylene glycol oleate, polyoxyethylene sorbitan monolaurate, diethylene glycol acrylate, diethylene glycol methacrylate or diethylene glycol crotonate; polyalkylene glycol diesters including, for example, diethylene glycol diacetate, diethylene glycol dipropionate, diethylene glycol diacrylate, diethylene glycol distearate, diethylene glycol dimethacrylate, tetraethylene glycol dicrotonate, polyethylene glycol diacetate, polyethylene glycol di-n-butylate, polyethylene glycol dilaurate, polyethylene glycol diacrylate, polyethylene glycol dimethacrylate, polyethylene glycol dicrotonate, polyethylene glycol di-α-cyanoacrylate, polyethylene glycol stearylmethacrylate or polyethylene glycol laurylacrylate; or polyalkylene glycol monoether monoesters including, for example, acrylate, methacrylate, crotonate or α-cyanoacrylate of glycol monoether compounds such as methylcarbitol, carbitol, diethylene glycol monoethyl ether, diethylene glycol monomethyl ether, polyethylene glycol monomethyl ether, polyethylene glycol monoethyl ether, tetraoxyethylene glycol monomethyl ether, polyoxyethylene glycol monolauryl ether or polyoxyethylene glycol monononyl phenyl ether. In addition, adducts of bisphenol A-polyalkylene oxide, adducts of trimethylol propanepolyalkylene oxide, adducts of glycerin-polyalkylene oxide, adducts of adipic acid-polyalkylene oxide or adducts of trimellitic acid-polyalkylene oxide may be used. Furthermore, cyclic compounds may be used, including 18-crown-6, 15-crown-5, 18-crown-5, dithio-15-crown, dibenzo-18-crown-6, dicyclohexyl-18-crown-6, 1,2-naphtho-15-crown-5 or 1,2-methylbenzo-18-crown-6. These additives may be used alone or in mixtures.

Calixarene compound is generally expressed as: 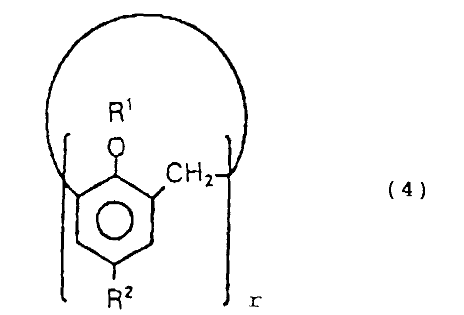 wherein R¹ is either a hydrogen atom or a substitutable alkyl or alkoxy group, R² is either a hydrogen atom or a substitutable alkyl group, and r is 4, 6 or 8. Preferred examples of such calixarene allene compounds are 5,11,17,23,29,35-hexa-tert-butyl-37,38,39,40,41,42-hexahydroxy calix-[6] allene, 37,38,39,40,41,42-hexahydroxy calix-[6] allene, 37,38,39,40,41,42-hexa-(2-oxo-2-ethoxy)-ethoxy calix-[6] allene, which is cited in JP-A-60-179482, and 25,26,27,28-tetra-(2-oxo-2-ethoxy)-ethoxy calixarene-[4].

Among these polyalkylene oxide derivatives, a polyalkylene oxide derivative having the following formula (1) is preferably used in the present invention. 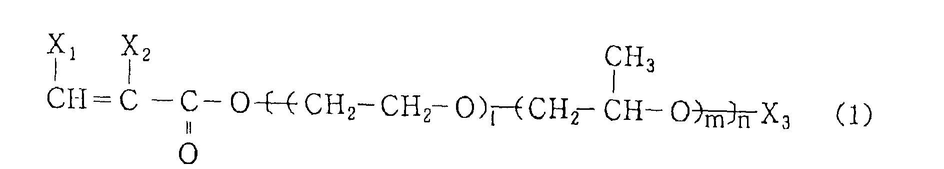 wherein X₁ is a hydrogen atom or methyl group; X₂ is a hydrogen atom, methyl group or cyano group; X₃ is a hydrogen atom, R₂ or R₂CO in which R₂ reprsents a hydrocarbon residue containing no anionically porimerizable groups; and 1, m and n are integers and (1 + m) ≧ 1 and n ≧ 1, and X₃ is not a hydrogen atom when X₂ is a cyano group or (1 + m) = 1.

In these polyalkylene oxide derivatives represented by the formula (1) or (3), X₁ through X₅ are as defined above and may be identical or different. X₁ through X₅ in the repeating unit p or m, or X₁ through X₅ in the repeating unit q or n may also be identical or different.

Quick curing additives are not always necessary, but they are incorporated in order to accelerate the curing rate. Preferable amount of the quick curing additives is 0.001 through 20 parts by weight, preferably 0.005 through 5 parts by weight, on the basis of 100 parts by weight of α-cyanoacrylates.

In addition, various additives may be blended depending on the purpose of products as long as stabilty of α-cyanoacrylate monomer is not impaired. The additives may include: stabilizers that have been conventionally used for α-cyanoacrylate adhesives, such as inhibitors for anionic polymerization, for example, sulfur dioxide, methanesulfonic acid, p-toluene sulfonic acid, boron trifluoride diethyl ether, HBF₄ or trialkylborate; inhibitors for radical polymerization, for example, hydroquinone, hydroquinone monomethyl ether, t-butyl catechol, catecohl or pyrogallol; plasticizers, for example, dimethyl phthalate, diethyl phthalate, dibutyl phthalate, 2-ethylhexyl phthalate or diisodecyl phthalate; or others such as colorants, perfumes, solvents, strength improvers, aliphatic polyvalent carboxylic acids, or aromatic polyvalent carboxylic acids. One or more of other known various thickeners which are used in combination with the cyanoacrylate may be used. They include acrylic rubbers, polyvinyl chloride, polystyrene, cellulose ester, polyalkyl-α-cyanoacrylate or ethylene-vinyl acetate copolymer.

The α-cyanoacrylate adhesive composition according to the present invention has high thixotropy and maintains for a long period of time the characteristics of so-called gel type cyanoacrylate adhesives or jellylike cyanoacrylate adhesives. In particular, the α-cyanoacrylate adhesive composition according to the present invention is improved in stability, i.e., whether separation in layer occurs during storage; dispersibility or compatibility and dispersion stability when the composition is prepared, viscosity stability when stored, or thread formation. The present adhesive composition has excellent performances during the preparation process, the application process and after the application. The present adhesive is good in adhering metals, plastics, rubbers or woods, in particular adhering porous materials, inclined plane or parts having large void.

### Example 1

To ethyl-α-cyanoacrylate (100 parts by weight) containing 30 ppm of SO₂ and 2,000 ppm of hydroquinone were added a methyl methacrylate/methyl acrylate (100/1) copolymer (14 parts by weight, weight average molecular weight: 150,000, a thickener) and monomethacrylate of polyethylene glycol (400) monomethyl ether (0.1 part by weight, a quick curing additive). After being thoroughly stirred, Aerosil 130 (5 parts by weight) was added. The mixture was uniformly dispersed with a disperser to prepare an adhesive composition.

The composition was tested with respect to physical properties, stability and adhesion performance. The results are:

| | |
|---|---|
| Initial viscosity | 55,000 (mPa·s) |
| Thixotropy index | 6.3 |
| Dispersibility (Compatibility) | 30 (seconds) |
| Set time | 40 (seconds) |
| Tensile shearing strength | 180 (kgf/cm²) |
| Viscosity stability | 9 (days) |

| After being stored for six months: | |
|---|---|
| Viscosity | 57,000 (mPa·s) |
| Thixotropy index | 6.5 |
| Set time | 40 (seconds) |

This adhesive composition had excellent performance as shown above; neither separation nor spinnability was observed.

### [Testing method]

1. Initial viscosity
   JIS K 6838 (BH type viscometer,No. 7 rotor, 20 rpm)
2. Thixotropy index
   JIS K 6838. (BH type viscometer, No. 7 rotor ratio of 2 rpm to 20 rpm)
3. Dispersibility (Compatibility)
   To a beaker are added α-cyanoacrylate and a thickener with or without a quick curing additive before ultrafine anhydrous silica is added. The mixture is dispersed with a disperser (1500 rpm) and the period of time (seconds) until uniform dispersion is realized is measured.
4. Set time
   JIS K 6838. Steel/steel adhesion is measured. Unit: seconds
5. Tensile shearing strength
   JIS K 6861-6. Steel/steel adhesion is measured.
6. Viscosity stability
   Adhesive composition(3 g, not stored after preparation) filled in an aluminum tube (4 cc) is kept at 100°C. The days until gelation occurs is measured (acceleration test).
7. Separability
   Adhesive composition placed in a polyethylene container (500 cc) is left at room temperature for 6 months. Then, whether or not the separation occurs is observed.
8. Spinnability
   A spatula inserted in an adhesive composition of 6 months old is pulled.

### Comparative Examples 1 - 5

Example 1s were repeated to prepare adhesive compositions except that thickeners which do not meet our specified requirements with respect to molecular weight and amount were used.

The results are shown in Table 1 together with those of Example 1.

**Table 1**

| | Example | Comparative Examples | | | | |
|---|---|---|---|---|---|---|
| | 1 | 1 | 2 | 3 | 4 | 5 |
| MMA/MA | | | | | | |
| MW (x 10⁴) | 15 | 5 | 40 | 100 | 15 | 15 |
| AMT (parts by weight) | 14 | 14 | 14 | 14 | 5 | 30 |

| PTY | | | | | | |
|---|---|---|---|---|---|---|
| 1.DSP (sec) | 30 | 40 | 90 | 120 | 20 | 90 |
| 2.STT (sec) | 40 | 50 | 50 | 60 | 40 | 80 |
| 3.VCS (days) | 9 | 8 | 7 | 6 | 9 | 6 |
| 4.SPT | No | No | Yes | Yes | Yes | No |
| | | | | | | |
| 5.SNA | No | Yes | No | No | No | Yes |
| Notes: | | | | | | |
| MMA/MA: Methyl methacrylate/Methyl acrylate copolymer | | | | | | |
| MW: Molecular weight AMT: Amount of addition | | | | | | |
| PTY: Properties of the composition | | | | | | |
| DSP: Dispersibility STT: Set time (initial) | | | | | | |
| VCS: Viscosity stability SPT: Separability | | | | | | |
| SNA: Spinnability | | | | | | |

### Example 2

To ethyl-α-cyanoacrylate (100 parts by weight) containing 30 ppm of SO₂ and 2,000 ppm of hydroquinone were first added methyl methacrylate/methyl acrylate (100/1) copolymer (12 parts by weight, weight average molecular weight: 200,000 a thickener) and monomethacrylate of polyethylene glycol (400) monomethyl ether (0.1 part by weight, a quick curing additive). After being thoroughly stirred, Aerosil 200 (5 parts by weight) was added. The mixture was uniformly dispersed with a disperser to prepare an adhesive composition.

The composition was tested in the same manner as in Example 1.

| The results: | |
|---|---|
| Initial viscosity | 50,000 (mPa·s) |
| Thixotropy index | 6.0 |
| Dispersibility (Compatibility) | 40 (seconds) |
| Set time | 50 (seconds) |
| Tensile shearing strength | 190 (kgf/cm²) |
| Viscosity stability | 9 (days) |

| After stored for six months: | |
|---|---|
| Viscosity | 55,000 (mPa·s) |
| Thixotropy index | 6.2 |
| Set time | 50 (seconds) |

This adhesive composition had excellent performance as shown above; neither separation nor spinnability was observed.

### Comparative Examples 6 - 10

Example 1s were repeated except that thickeners which do not meet our specified requirements were used.

The results are shown in Table 2 together with those of Example 2.

**Table 2**

| | Example | Comparative Examples | | | | |
|---|---|---|---|---|---|---|
| | 2 | 6 | 7 | 8 | 9 | 10 |
| MMA/MA | | | | | | |
| MW (x 10⁴) | 20 | 5 | 40 | 100 | 20 | 20 |
| AMT (parts by weight) | 12 | 12 | 12 | 12 | 5 | 30 |
| | | | | | | |

| PTY | | | | | | |
|---|---|---|---|---|---|---|
| 1.DSP (sec) | 40 | 40 | 80 | 110 | 30 | 110 |
| 2.STT (sec) | 50 | 60 | 60 | 70 | 50 | 90 |
| 3.VCS (days) | 9 | 9 | 8 | 7 | 9 | 6 |
| 4.SPT | No | No | Yes | Yes | Yes | No |
| | | | | | | |
| 5.SNA | No | Yes | No | No | No | Yes |

### Example 3

To ethyl-α-cyanoacrylate (100 parts by weight) containing 30 ppm of SO₂ and 2,000 ppm of hydroquinone were added a methyl methacrylate/methyl acrylate (100/1) copolymer (14 parts by weight, a weight average molecular weight: 150,000, a thickener) and monomethacrylate of polyethylene glycol (400) monomethyl ether (0.1 part by weight, a quick curing additive). After being throughly stirred, Aerosil R202 (5 parts by weight) was added. The mixture was uniformly dispersed with a disperser, to prepare an adhesive composition. The composition was tested in the same manner as in Example 1.

| The results: | |
|---|---|
| Initial viscosity | 48,000 (mPa·s) |
| Thixotropy index | 6.0 |
| Dispersibility (Compatibility) | 30 (seconds) |
| Set time | 20 (seconds) |
| Tensile shearing strength | 180 (kgf/cm²) |
| Viscosity stability | 10 (days) |

| After stored for six months: | |
|---|---|
| Viscosity | 50,000 (mPa·s) |
| Thixotropy index | 6.1 |
| Set time | 20 (seconds) |

This adhesive composition had excellent performance as shown above; neither separation nor spinnability was observed.

### Comparative Examples 11 - 15

Example 1s were repeated except that thickeners which do not meet our requirements were used.

The results are shown in Table 3 together with those of Example 3.

**Table 3**

| | Example | Comparative Examples | | | | |
|---|---|---|---|---|---|---|
| | 3 | 11 | 12 | 13 | 14 | 15 |
| MMA/MA | | | | | | |
| MW (x 10⁴) | 15 | 5 | 40 | 100 | 15 | 15 |
| AMT (parts by weight) | 14 | 14 | 14 | 14 | 5 | 30 |
| | | | | | | |

| PTY | | | | | | |
|---|---|---|---|---|---|---|
| 1.DSP (sec) | 30 | 40 | 90 | 120 | 20 | 90 |
| 2.STT (sec) | 20 | 30 | 30 | 40 | 20 | 50 |
| 3.VCS (days) | 10 | 8 | 7 | 6 | 9 | 6 |
| 4.SPT | No | No | Yes | Yes | Yes | No |
| | | | | | | |
| 5.SNA | No | Yes | No | No | No | Yes |

## Claims

1. An α-cyanoacrylate adhesive composition, the alpha cyanoacrylate having the formula 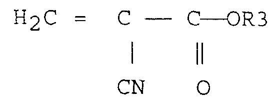 wherein R3 is a hydrocarbon residue having 1 through 16 carbon atoms and may be substituted, which comprises (b) 10 through 20 parts by weight of (I) polyalkyl methacrylates being a homopolymer of lower alkyl esters of methacrylic acid or (II) copolymers of (i) alkyl methacrylates and (ii) other methacrylates or acrylates excluding the (i) alkyl methacrylates, the monomer moiety (i) being the same as that used in the above polyalkylmethacrylates (I), said copolymers having the same weight average molecular weight as that of the polyalkyl methacrylates (I), (c) 2 through 20 parts by weight of ultrafine anhydrous silicas, and (d) 0 through 20 parts by weight of quick curing additives, (b)-(d) being on the basis of (a) 100 parts by weight of α-cyanoacrylate compounds characterized by component (b) having a weight average molecular weight of 100,000 through 300,000.

2. An α-cyanoacrylate adhesive composition according to claim 1, wherein the polyalkyl methacrylates (I) or the copolymers (II) of alkyl methacrylates and other methacrylates or acrylates are polymethyl methacrylate or copolymers of methyl methacrylate and other methacrylates or acrylates.

3. An α-cyanoacrylate adhesive composition according to claim 1 or 2, wherein 0.001 through 20 parts by weight of the quick curing additives are contained.

4. An α-cyanoacrylate adhesive composition according to any one of claims 1 through 3, wherein the quick curing additives are at least one selected from polyhydric alcohols, polyalkylene oxide and calixarenes.

5. An α-cyanoacrylate adhesive composition according to claim 4, wherein the polyalkylene oxide is represented by the formula (1) 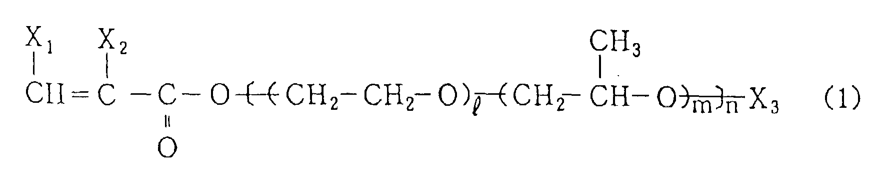 wherein X₁ is a hydrogen atom or methyl group; X₂ is a hydrogen atom, methyl group or cyano group; X₃ is a hydrogen atom; R₂ or R₂CO in which R₂ represents a hydrocarbon residue containing no anionically polymerizable group; and ℓ, m and n are integers and (ℓ + m) ≥ 1 and n ≥ 1,, and X₃ is not a hydrogen atom when X₂ is a cyano group or (ℓ + m) = l.

## Patentansprüche

1. α-Cyanacrylat-Klebemittelzusammensetzung, wobei das α-Cycanacrylat die Formel 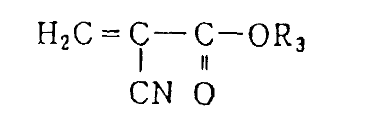 hat, worin R₃ ein Kohlenwasserstoffrest mit 1 bis 16 Kohlenstoffatomen ist, der substituiert sein kann, gekennzeichnet durch (b) 10 bis 20 Gewichtsteile von (I) Polyalkylmethacrylaten, die eine Homopolymeres von Niederalkylestern von Methacrylsäure oder (II) Copolymere von (i) Alkylmethacrylaten und (ii) anderen Methacrylaten oder Acrylaten sind, mit Ausnahme der (i) Alkylmethacrylate, wobei der Monomerteil (i) der gleiche ist wie der in den obigen Polyalkylmethacrylaten (I) verwendete, wobei die Copolymeren die gleiche massegemittelte Molekülmasse haben wie die der Polyalkylmethacrylate (I), (c) 2 bis 20 Gewichtsteile ultrafeine wasserfreie Siliciumdioxide und (d) 0 bis 20 Gewichtsteile schnell härtende Additive, wobei (b) - (d) auf Basis von (a) 100 Gewichtsteilen von α-Cyanacrylatverbindungen sind, gekennzeichnet durch die Komponente (b), die eine massegemittelte Molekülmasse von 100.000 bis 300.000 hat.

2. α-Cyanacrylat-Klebemittelzusammensetzung nach Anspruch 1, worin die Polyalkylmethacrylate (I) oder die Copolymeren (II) von Alkylmethacrylaten und anderen Methacrylaten oder Acrylaten Polymethylmethacrylate oder Copolymere von Methylmethacrylaten oder anderen Methacrylaten oder Acrylaten sind.

3. α-Cyanacrylat-Klebemittelzusammensetzung nach Anspruch 1 oder 2, worin 0,001 bis 20 Gewichtsteile der schnell härtenden Additive enthalten sind.

4. α-Cyanacrylat-Klebemittelzusammensetzung nach einem der Ansprüche 1 bis 3, worin die schnell härtenden Additive wenigstens unter mehrwertigen Alkoholen, Polyalkylenoxid und Calixarenen ausgewählt sind.

5. α-Cyanacrylat-Klebemittelzusammensetzung nach Anspruch 4, worin das Polyalkylenoxid durch die Formel (1) 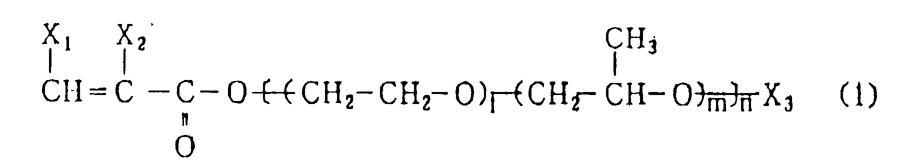 repräsentiert wird, worin X₁ ein Wasserstoffatom oder eine Methylgruppe ist, X₂ ist ein Wasserstoffatom, eine Methylgruppe oder eine Cyangruppe; X₃ ist ein Wasserstoffatom, R₂ oder R₂CO, worin R₂ ein Kohlenwasserstoffrest ist, der keine anionisch polymerisierbare Gruppe enthält; und l, m und n sind ganze Zahlen, und (l+m)≥1, und n≥1, und X₃ ist kein Wasserstoffatom, wenn X₂ eine Cyangruppe oder (l+m)=1 ist.

## Revendications

1. Composition adhésive à base d'alpha-cyanoacrylate, l'alphacyanoacrylate ayant la formule 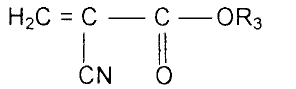 dans laquelle R₃ est un radical hydrocarboné ayant de 1 à 16 atomes de carbone et peut être substitué, qui comprend (b) de 10 à 20 parties de poids de (I) des poly(méthacrylate d'alcoyle) qui sont des homopolymères d'ester alcoylique inférieur de l'acide méthacrylique ou (II) des copolymères de (i) des méthacrylates d'alcoyle et (ii) d'autres méthacrylates ou acrylates à l'exclusion des méthacrylates d'alcoyle (i), le radical (i) monomère étant le même que celui utilisé dans les poly(méthacrylates d'alcoyle) (I) ci-dessus, les copolymères ayant la même masse moléculaire moyenne en poids que celle des poly(méthacrylates d'alcoyle) (I), (c) de 2 à 20 parties en poids de silices anhydres ultrafines et (d) de 0 à 20 parties en poids d'additifs de durcissement rapide, (b) à (d) étant sur la base de (a) 100 parties en poids d'alphacyanoacrylate, caractérisée en ce que le constituant (b) a une masse moléculaire moyenne en poids de 100 000 à 300 000.

2. Composition adhésive à base d'alphacyanoacrylate suivant la revendication 1, dans laquelle les poly(méthacrylates d'alcoyle) (I) ou les copolymères (II) de méthacrylate d'alcoyle et d'autres méthacrylates ou acrylates sont du poly(méthacrylate de méthyle) ou des copolymères de méthacrylate de méthyle et d'autres méthacrylates ou acrylates.

3. Composition adhésive à base d'alphacyanoacrylate suivant la revendication 1 ou 2, qui contient de 0,001 à 20 parties en poids d'additif de durcissement rapide.

4. Composition adhésive à base d'alphacyanoacrylate suivant l'une quelconque des revendications 1 à 3, dans laquelle les additifs de durcissement rapide sont au moins un additif choisi parmi les polyalcools, les poly(oxydes d'alcoylène) et les calixarènes.

5. Composition adhésive à base d'alphacyanoacrylate suivant la revendication 4, dans laquelle le poly(oxyde d'alcoyle est représenté par la formule (1) 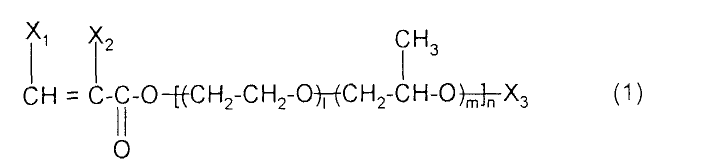 dans laquelle X₁ est un atome d'hydrogène ou un groupe méthyle, X₂ est un atome d'hydrogène, un groupe méthyle ou un groupe cyano, X₃ est un atome d'hydrogène, R₂ ou R₂CO dans lequel R₂ représente un radical hydrocarboné ne contenant pas de groupe polymérisable par voie anionique ; et l, m et n sont des nombres entiers et (l + m) ≥ et n ≥ 1 et X₃ n'est pas un atome d'hydrogène quand X₂ est un groupe cyano ou quand (l + m) = 1.
